# FASCICULE DE BREVET EUROPEEN

(11) **EP 0 595 704 B1**
(45) Date de publication et mention de la délivrance du brevet: **22.11.1995**
(21) Numéro de dépôt: 93402612.1
(22) Date de dépôt: 25.10.1993
(51) Int. Cl.: F16D 65/16

(54) **Piston pour l'actionnement d'une plaquette de frein à disque**
Kolben zur Betätigung eines Scheibenbremsklotzes
Piston for actuation of a disc brake pad

(30) Priorité: 26.10.1992 FR 9212716
(43) Date de publication de la demande: 04.05.1994
(73) Titulaire: HUTCHINSON, F-75008 Paris (FR)
(72) Inventeur: Domer, Michel, F-60790 Valdampierre (FR)
(74) Mandataire: Picard, Jean-Claude Georges

(56) Documents cités:
- FR-A- 1 553 531
- FR-A- 2 548 321
- US-A- 2 801 714
- US-A- 3 931 871

## Description

La présente invention concerne un piston pour l'actionnement d'une plaquette de frein à disque, cette plaquette étant munie d'une plaque d'appui et le piston ayant la forme d'un corps creux s'ouvrant vers cette plaque, c'est-à-dire qu'il présente du côté de la plaque d'appui, après son montage, une extrémité de forme annulaire. Un tel piston est connu par exemple par le document FR-A-2 548 321. Le problème que la présente invention vise à résoudre est celui de l'élimination des bruits de freinage apparaissant sous la forme de crissements ou de hurlements, extrêmement désagréables, qui se produisent surtout dans certaines conditions. Ces bruits ont pour origine des vibrations dans la bande 500 à 5000 Hz, apparaissant surtout par temps sec et lorsque les plaquettes atteignent environ 100°C. Leur intensité et leur fréquence peuvent également dépendre de la pression de freinage, du régime de la roue ou d'autres paramètres.

L'invention résoud très facilement et économiquement ce problème grâce à un piston du type mentionné au début, caractérisé en ce qu'il comporte un coussin de matière élastique supporté par une coupelle rigide elle-même supportée par le piston, ce coussin possédant d'une part une partie centrale épaisse propre à s'étendre, après montage, entre ladite plaque d'appui de la plaquette et un fond que comporte ladite coupelle rigide, et d'autre part un bord aminci situé légèrement en saillie par rapport à ladite extrémité annulaire du piston.

Lors du freinage, le coussin élastique s'interposera donc entre l'ensemble rigide disque/plaquette et l'ensemble rigide constitué par le piston et son cylindre, ce qui explique l'amortissement radical des vibrations engendrées par le disque.

En outre, l'action du piston sur les plaquettes est progressive : au début du freinage, la raideur du système piston/plaquette est relativement faible, tant que dure la mise en compression de la partie centrale du coussin élastique contre le fond de la coupelle. Ensuite seulement, la raideur de ce sytème devient très forte, ce qui est évidemment nécessaire pour l'obtention d'un freinage efficace : la partie centrale du coussin élastique est entièrement comprimée sur le fond de la coupelle, et seule une très mince couche de matière élastique reste comprimée, au niveau du bord aminci précité, sur la plaque d'appui de la plaquette. L'action du piston sur la plaquette est alors pratiquement directe.

Cette action en deux temps du freinage augmente encore l'effet d'amortissement des vibrations, et évite toute intervention brutale des plaquettes sur les disques dès le début de la mise en pression du cylindre.

L'invention peut se mettre en oeuvre de différentes façons.

On peut prévoir par exemple que ladite coupelle occupe la partie creuse du piston et est supportée par le fond de ce piston, ce qui évite d'augmenter l'encombrement du piston dans la direction de ses déplacements.

Dans ce mode de réalisation, il est encore avantageux de prévoir que ledit bord aminci du coussin est en appui sur un rebord de ladite coupelle, en saillie par rapport à son fond, ce rebord se situant sensiblement au même niveau que ladite extrémité annulaire du piston.

Selon un autre mode de réalisation, on peut prévoir que ladite coupelle est supportée par un bord en appui sur ladite extrémité annulaire du piston.

Quel que soit le mode de réalisation, on peut encore prévoir, pour éviter les crissements entre la coupelle et le piston, qu'une couche de matière élastique est interposée entre ladite coupelle rigide et ledit piston.

Selon l'invention, il sera encore avantageux de prévoir que la surface extérieure de ladite partie centrale du coussin est légèrement inclinée par rapport à un plan perpendiculaire à la direction de déplacement dudit piston, ceci contribuant encore très efficacement à éviter les vibrations du disque de freinage, et donc les crissements désagréables.

Différents modes d'exécution de l'invention vont maintenant être décrits à titre d'exemples nullement limitatifs, avec référence aux figures du dessin annexé dans lequel :
- la figure 1 est une vue en coupe axiale d'un premier mode de réalisation d'un piston conforme à l'invention;
- la figure 1a est une vue en coupe axiale partielle de ce piston selon une variante;
- la figure 2 représente le piston de la figure 1 monté dans un système de frein à disque, ce système étant représenté en position de freinage;
- la figure 3 représente un autre système de frein à disque équipé d'un piston établi selon une autre variante;
- la figure 4 représente le système de la figure 3 en position de freinage; et
- la figure 5 est un diagramme montrant l'évolution de la raideur du piston au cours d'une action de freinage et représentant par conséquent les efforts F s'exerçant sur le piston en fonction de ses déplacements d.

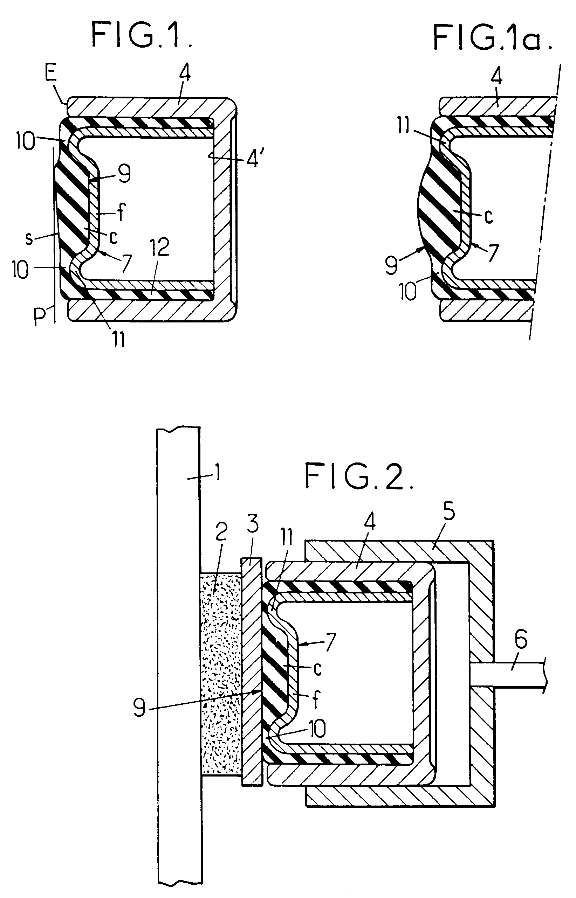

Il est tout d'abord précisé que dans les figures 2, 3 et 4 on n'a représenté que la moitié d'un système de freinage (la partie qui se trouve à la droite du disque), étant bien entendu que le système pourra présenter de l'autre côté du disque le même genre de dispositions.

En se référant tout d'abord aux figures 1 et 2, on a désigné en 1 le disque à freiner, en 2 la plaquette et en 3 sa plaque d'appui. Un piston creux 4 est monté coulissant dans un cylindre 5 connecté à une amenée de fluide sous pression 6.

Dans le piston creux 4 est montée une coupelle métallique 7, par exemple de forme générale cylindrique, et qui prend appui par son extrémité ouverte sur le fond 4' du piston. Le fond f de cette coupelle 7 est embouti de sorte à faire saillie vers l'intérieur du piston creux et à présenter sur son pourtour un renflement ou rebord 11 en saillie par rapport au fond f, pour venir se situer sensiblement au même niveau que l'extrémité annulaire E du piston 4. La partie ainsi creusée du fond f de la coupelle 7 supporte un coussin de matière élastique, par exemple en élastomère, référencé en 9, ce coussin possédant une partie centrale épaisse c occupant le fond f de la coupelle, et un bord aminci 10 recouvrant le rebord 11; ce bord aminci 10 du coussin 9 se trouve donc légèrement en saillie par rapport au plan de l'extrémité annulaire E du cylindre 4.

Le bord aminci 10, par ailleurs, se prolonge vers l'intérieur du cylindre 4 pour constituer sur la paroi latérale de la coupelle 7 un mince revêtement 12 d'élastomère s'interposant ainsi entre la coupelle 7 et le piston, ce qui évite tout risque de crissement à ce niveau.

Enfin on observe sur la figure 1 que la surface extérieure s de la partie centrale c du coussin 9 n'est pas destinée, après montage, à être exactement parallèle à la surface en regard de la plaque d'appui 3 de la plaquette 2: cette surface extérieure s de la partie centrale c est en effet légèrement inclinée par rapport à un plan P perpendiculaire à la direction de déplacement du piston.

Ainsi on conçoit que lorsque le cylindre 5 sera alimenté en fluide hydraulique sous pression (voir figure 2) l'écrasement de la partie centrale c du coussin 9 entre le fond f de la coupelle et la plaquette d'appui 3 se fera progressivement, d'une extrémité à l'autre de cette surface s du coussin. Cette disposition complète très avantageusement l'effet amortisseur du coussin de matière élastique 9 en amortissant les vibrations qui peuvent solliciter le disque 1 et en empêchant très efficacement leur transmission à toutes les pièces qui agissent sur la plaquette 2. Il est à souligner cependant que l'essentiel de l'effet amortisseur du coussin 9 pourrait être obtenu avec une surface s qui serait confondue avec le plan P, l'essentiel étant d'éviter toute mise en pression brutale de la plaque d'appui 3 lors du freinage.

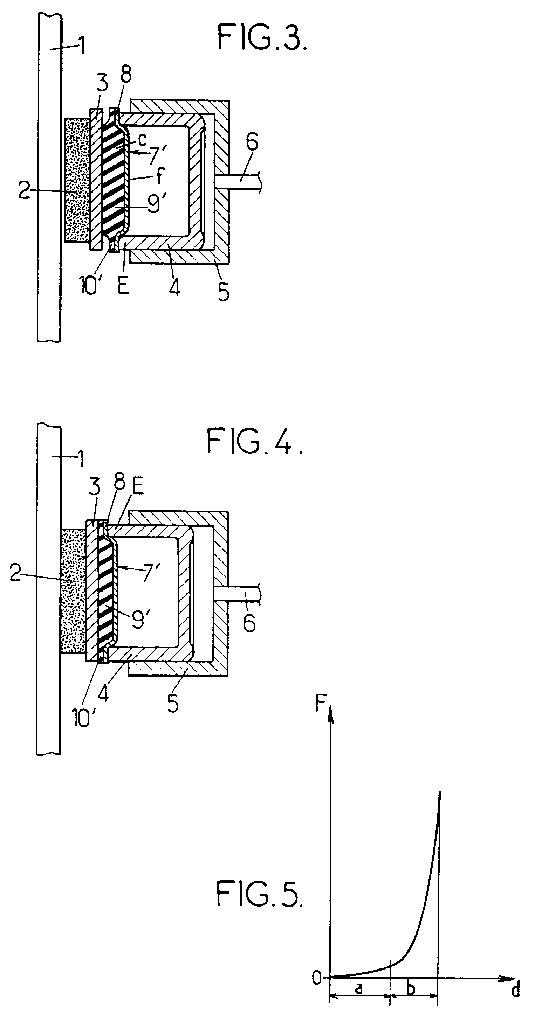

Le graphique de la figure 5 montre bien comment un piston conforme à l'invention permet d'absorber les efforts de freinage : au début de l'action de freinage le coussin 9 est comprimé sur le fond f de la coupelle 7, ce qui correspond à la partie à faible raideur (a) du graphique de la figure 5. Lorsque, la pression de freinage augmentant, le rebord 11 de la coupelle vient comprimer le bord aminci 10 du coussin sur la plaque d'appui 3 de la plaquette, la raideur du système devient très forte, comme indiqué dans la partie (b) du graphique. Ainsi le freinage peut donc rester très efficace, le système retrouvant rapidement la raideur nécessaire à l'action de freinage, tout en échappant entièrement aux vibrations habituelles engendrées par le disque.

A la figure 1a on a représenté une variante pour la forme de la surface extérieure du coussin de matière élastique 9 qui occupe la coupelle 7 : cette surface extérieure est ici bombée selon une forme sphérique ou analogue, ce qui permet au piston, lors d'une action de freinage, de se comporter d'une façon un peu analogue à ce qui vient d'être décrit (plus grande progressivité de l'application du coussin élastique 9 contre la plaque d'appui 3) mais avec en outre la possibilité pour la plaquette de "rotuler" légèrement, c'est-à-dire de prendre la meilleure orientation possible lorsque du fluide hydraulique sous pression alimente le cylindre.

Aux figures 3 et 4 on a représenté une autre variante, selon laquelle la coupelle, ici référencée 7', présente en creux un fond f analogue à celui des figures 1 et 2 mais prend plus simplement appui sur l'extrémité annulaire E du piston 4 par l'intermédiaire d'un bord 8. L'observation des figures 3 et 4 représentant le système de freinage respectivement au repos et sous pression permet facilement de se rendre compte que le fonctionnement du coussin de matière élastique 9' en appui sur la coupelle 7' est pratiquement le même que dans le mode de réalisation précédent : compression élastique de la partie centrale épaisse c du coussin entre le fond f de la coupelle et la plaque d'appui 3 (partie à faible raideur a du graphique de la figure 5) puis, l'action de freinage se poursuivant, augmentation brusque de la raideur du système par compression du bord aminci 10' du coussin 9' entre le bord 8 de la coupelle et la plaque d'appui 3. Là également bien entendu on pourrait prévoir pour le coussin 9' une surface extérieure inclinée ou encore une surface extérieure bombée, ceci avec les mêmes effets que dans les modes de réalisation respectivement des figures 1 et 1a.

Dans ce mode de réalisation des figures 3 et 4 on pourrait également prévoir un léger revêtement de caoutchouc sur la face extérieure de la coupelle 7' pour éviter tout contact métal/métal entre cette coupelle et l'extrémité annulaire E du piston 4.

## Revendications

1. Piston pour l'actionnement d'une plaquette de frein à disque, cette plaquette (2) étant munie d'une plaque d'appui (3) et le piston (4) ayant la forme d'un corps creux s'ouvrant vers cette plaque d'appui (3), c'est-à-dire qu'il présente du côté de la plaque d'appui (3), après son montage, une extrémité (E) de forme annulaire, caractérisé en ce qu'il comporte un coussin (9, 9') de matière élastique supporté par une coupelle rigide (7, 7') elle-même supportée par le piston (4), ce coussin possédant d'une part une partie centrale (c) épaisse propre à s'étendre, après montage, entre ladite plaque d'appui (3) de la plaquette et un fond (f) que comporte ladite coupelle rigide (7, 7'), et d'autre part un bord aminci (10, 10') situé légèrement en saillie par rapport à ladite extrémité annulaire (E) du piston (4).

2. Piston selon la revendication 1, caractérisé en ce que ladite coupelle (7) occupe la partie creuse du piston (4) et est supportée par le fond (4') de ce piston.

3. Piston selon la revendication 1 ou 2, caractérisé en ce que ledit bord aminci (10) du coussin (9) est en appui sur un rebord (11) de ladite coupelle (7), en saillie par rapport à son fond (f), ce rebord (11) se situant sensiblement au même niveau que ladite extrémité annulaire (E) du piston (4).

4. Piston selon la revendication 1, caractérisé en ce que ladite coupelle (7') est supportée par un bord (8) en appui sur ladite extrémité annulaire (E) du piston (4).

5. Piston selon l'une quelconque des revendications précédentes, caractérisé en ce qu'une couche de matière élastique (12) est interposée entre ladite coupelle rigide (7) et ledit piston (4).

6. Piston selon l'une quelconque des revendications précédentes, caractérisé en ce que la surface extérieure (s) de ladite partie centrale (c) du coussin (9, 9') est légèrement inclinée par rapport à un plan (P) perpendiculaire à la direction de déplacement dudit piston.

7. Piston selon l'une quelconque des revendications 1 à 5, caractérisé en ce que la surface extérieure de la partie centrale (c) du coussin (9, 9') est bombée.

## Claims

1. Piston for actuating a disc brake pad, this pad (2) having a bearing plate (3) and the piston (4) having the shape of a hollow body opening towards the bearing plate (3), that is, after it has been fitted, it has an end (E) of an annular shape on the side facing the bearing plate (3), characterized in that it comprises a cushion (9, 9') of resilient material supported by a rigid cup (7, 7') which itself is supported by the piston (4), this cushion having, on the one hand, a thick central portion (c) which, after assembly, can extend between the said bearing plate (3) of the pad and a base (f) of the said rigid cup (7, 7') and, on the other hand, an edge (10, 10') of reduced thickness disposed so as to project slightly relative to the said annular edge (E) of the piston (4).

2. Piston according to Claim 1, characterized in that the said cup (7) occupies the hollow portion of the piston (4) and is supported by the base (4') of this piston.

3. Piston according to Claim 1 or Claim 2, characterized in that the said edge (10) of reduced thickness of the cushion (9) bears on a rim (11) of the said cup (7) projecting relative to its base (f), this rim (11) being disposed substantially at the same level as the said annular end (E) of the piston (4).

4. Piston according to Claim 1, characterized in that the said cup (7') is supported by an edge (8) bearing on the said annular end (E) of the piston (4).

5. Piston according to any one of the preceding claims, characterized in that a layer of resilient material (12) is interposed between the said rigid cup (7) and the said piston (4).

6. Piston according to any one of the preceding claims, characterized in that the external surface (s) of the said central portion (c) of the cushion (9, 9') is slightly inclined relative to a plane (P) perpendicular to the direction of movement of the said piston.

7. Piston according to any one of Claims 1 to 5, characterized in that the external surface of the central portion (c) of the cushion (9, 9') is convex.

## Patentansprüche

1. Kolben zur Betätigung eines Scheibenbremsenbelags, wobei dieser Belag (2) mit einer Lagerplatte (3) versehen ist und wobei der Kolben (4) die Form eines Hohlkörpers aufweist, der sich in Richtung auf die Lagerplatte (3) öffnet, der also nach seiner Montage auf der Seite der Lagerplatte (3) ein Ende E in Ringform aufweist, dadurch gekennzeichnet, daß er ein Kissen (9, 9') aus elastischem Material enthält, das von einer steifen Kapsel (7, 7') getragen wird, die ihrerseits vom Kolben (4) getragen wird, wobei dieses Kissen einerseits einen dicken Zentralteil (c) aufweist, der sich nach Montage zwischen der Lagerplatte (3) des Belags und einem Fondteil (f) erstrecken kann, der die steife Kapsel (7, 7') enthält, und andererseits einen sich verjüngenden Randanschlag (10, 10') enthält, der geringfügig über das ringförmige Ende E des Kolbens (4) hinausragt.

2. Kolben nach Anspruch 1, dadurch gekennzeichnet, daß die Kapsel (7) den hohlen Teil des Kolbens (4) einnimmt und vom Fond (4') dieses Kolbens getragen wird.

3. Kolben nach Anspruch 1 oder 2, dadurch gekennzeichnet, daß der sich verjungende Randanschlag (10) des Kissens (9) an einem Randanschlag (11) der Kapsel (7) anliegt, und zwar gegenüber deren Fond f hervorstehend, wobei sich dieser Randanschlag (11) genau auf dem gleichen Niveau befindet wie das ringförmige Ende E des Kolbens (4).

4. Kolben nach Anspruch 1, dadurch gekennzeichnet, daß die Kapsel (7') von einem Randanschlag (8) getragen wird, der an das ringförmige Ende (E) des Kolbens (4) anliegt.

5. Kolben nach einem der vorangegangenen Ansprüche, dadurch gekennzeichnet, daß eine Schicht (12) aus elastischem Material zwischen der steifen Kapsel (7) und dem Kolben (4) eingefügt ist.

6. Kolben nach einem der vorangegangenen Ansprüche, dadurch gekennzeichnet, daß die äußere Oberfläche s des Zentralteils (c) des Kissens (9, 9') geringfügig gegenüber einer Ebene (P) geneigt ist, die senkrecht zur Bewegungsrichtung des Kolbens verläuft.

7. Kolben nach einem der Ansprüche 1 bis 5, dadurch gekennzeichnet, daß die äußere Oberfläche des Zentralteils c des Kissens (9, 9') gewölbt ist.
